# EUROPÄISCHE PATENTSCHRIFT

(11) **EP 3 393 941 B1**
(45) Veröffentlichungstag und Bekanntmachung des Hinweises auf die Patenterteilung: **20.08.2025**
(21) Anmeldenummer: 16809028.0
(22) Anmeldetag: 08.12.2016
(51) Int. Cl.: B65G 17/06, B65G 17/46

(54) **VORRICHTUNG ZUM TRANSPORT VON VERPACKUNGEN**
DEVICE FOR TRANSPORTING PACKAGING
DISPOSITIF DE TRANSPORT D'EMBALLAGES

(30) Priorität: 22.12.2015 DE 102015122488
(43) Veröffentlichungstag der Anmeldung: 31.10.2018
(73) Patentinhaber: SIG Services AG, 8212 Neuhausen am Rheinfall (CH)
(72) Erfinder: HEIL, Michael, 41179 Mönchengladbach (DE)
(74) Vertreter: Cohausz & Florack
(86) Internationale Anmeldenummer: PCT/EP2016/080277
(87) Internationale Veröffentlichungsnummer: WO 2017/108434

(56) Entgegenhaltungen:
- EP-A1- 2 870 955
- DE-A1- 10 360 082
- US-A- 3 783 994
- US-A1- 2005 109 422
- US-A1- 2008 199 286
- US-A1- 2015 291 361
- US-B2- 6 695 132

## Beschreibung

Die Erfindung betrifft eine Vorrichtung zum Transport von Verpackungen, insbesondere Verpackungen für Nahrungsmittel, umfassend: einen Rahmen, wenigstens zwei drehbar an dem Rahmen gelagerte Scheiben, wenigstens ein um die Scheiben umlaufendes Zugmittel, mehrere Aufnahmen zur Aufnahme der Verpackungen, wobei die Aufnahmen mit dem Zugmittel verbunden sind, wobei das Zugmittel ein Riemen, insbesondere ein Synchronriemen ist, mehrere Querträger, die jeweils mehrere Aufnahmen zur Aufnahme der Verpackungen aufweisen, mehrere Adapterelemente, die mit den Riemen verbunden sind, wenigstens zwei Schienen zur Führung der Adapterelemente, wobei jeder Querträger über zwei an gegenüberliegenden Enden des Querträgers angeordnete Adapterelemente mit unterschiedlichen Riemen verbunden ist, und wobei die Riemen Verstärkungen aufweisen.

Die Erfindung betrifft zudem die Verwendung einer derartigen Vorrichtung zum Transport von Verpackungen für Nahrungsmittel, insbesondere von Verbundverpackungen für Nahrungsmittel.

Auf dem Gebiet der Verpackungstechnik sind unterschiedlichste Vorrichtungen bekannt, mit denen Verpackungen transportiert werden können. Vorrichtungen dieser Art dienen insbesondere dazu, die Verpackungen vor, während und nach ihrer Befüllung zu transportieren. Hierzu ist es erforderlich, die Verpackungen zu unterschiedlichen Bearbeitungs- und Befüllstationen zu bewegen. Zu den Bearbeitungsstationen zählen beispielsweise Stationen zum Falten und Verschließen der Unterseiten (Bodenbereich) der Verpackungen sowie Stationen zum Falten und Verschließen der Oberseiten (Giebelbereich) der Verpackungen. Die Befüllstation dient dazu, die - typischerweise flüssigen - Inhalte wie Milch, Saft, Joghurt oder Suppe in die Verpackungen einzufüllen.

Die bekannten Vorrichtungen sind oftmals mit Aufnahmen versehen, in die die Verpackungen eingestellt oder eingeklemmt werden. Durch die Aufnahmen wird eine genaue Positionierung der Verpackungen möglich. Eine präzise Ausrichtung der Verpackungen ist essenziell für eine genaue Bearbeitung und Befüllung der Verpackungen. Bei der Bearbeitung der Verpackungen ist eine hohe Präzision erforderlich, damit die Werkzeuge (z.B. Faltwerkzeug, Verschließwerkzeug) an den vorgesehenen Stellen an die Verpackungen angreifen können. Dies ist wichtig, um den oft nur einige Zehntelmillimeter starken Packstoff, bzw. seine noch dünneren einzelnen Laminatschichten nicht zu beschädigen. Bei der Befüllung der Verpackungen ist ebenfalls eine hohe Präzision erforderlich, damit der Inhalt auf die gewünschte Weise - also möglichst ohne Schaumbildung und frei von Spritzern - in die Verpackungen gefüllt werden kann. Hierzu ist eine sehr genaue Relativstellung zwischen Fülldüsen und Verpackungen erforderlich.

Vorrichtungen zum Transport von Verpackungen sind beispielsweise aus der DE 10 2010 050 502 A1 und der CH 530 307 A bekannt. Die dort beschriebenen Vorrichtungen weisen als Zugmittel umlaufende Metallketten auf, an denen Zellen zur Aufnahme der Verpackungen befestigt sind ("Zellenkette"). Diese Vorrichtungen werden daher auch als "Kettenförderer" bzw. "Horizontal-Kettenförderer" bezeichnet. Ketten haben den Vorteil, dass sie sehr hohe Zugkräfte formschlüssig und somit schlupffrei übertragen können. Ein weiterer Vorteil von Metallketten liegt darin, dass die Zellen zur Aufnahme der Verpackungen einfach mit den Kettengliedern verbunden werden können, beispielsweise können sie mit den Laschen der Kette verschweißt werden oder in die Lücken der Kette eingreifen.

An den bekannten Vorrichtungen hat sich jedoch als nachteilig herausgestellt, dass Ketten eine relativ hohe Kettenlängung von etwa 2 % und mehr aufweisen. Die Längung ergibt sich aus der Tatsache, dass die Kettenglieder nicht absolut spielfrei miteinander verbunden werden können. Aufgrund der hohen Anzahl an Kettengliedern summieren sich auch geringe Toleranzen zwischen den einzelnen Kettengliedern zu einer signifikanten Gesamtlängung. Der Längung von Ketten wird zwar teilweise durch Spannelemente begegnet. Der Einsatz von Spannvorrichtungen ist jedoch insbesondere bei schnell wechselnden Zugbelastungen kaum wirksam. Wechselnde Zugbelastungen treten beispielsweise bei Transportvorrichtungen auf, die taktweise - also intermittierend - betrieben werden. Durch die Kettenlängung können die eingangs beschriebenen, hohen Anforderungen an eine präzise Positionierung der Verpackungen häufig nicht erfüllt werden.

Aus dem Stand der Technik ist zudem die US 2008/ 199 286 A1 bekannt, welche eine Vorrichtung nach dem Oberbegriff des Anspruchs 1 offenbart, wobei die Vorrichtung mehrere Querträger mit mehreren Aufnahmen zur Aufnahme von Teigschalen aufweist.

Der Erfindung liegt daher die Aufgabe zugrunde, die eingangs beschriebene und zuvor näher erläuterte Vorrichtung derart auszugestalten und weiterzubilden, dass auch bei langen Transportstrecken eine präzise Positionierung der Verpackungen ermöglicht wird.

Diese Aufgabe wird bei einer Vorrichtung nach dem Oberbegriff von Patentanspruch 1 dadurch gelöst, dass die Riemen unverstärkte Bereiche mit Bohrungen aufweisen, wobei die Bohrungen dazu dienen, die Adapterelemente mit den Riemen formschlüssig zu verbinden, und dass die Bohrungen von der Rückseite zur Vorderseite des Riemens verlaufen.

Die erfindungsgemäße Vorrichtung dient dem Transport von Verpackungen, insbesondere Verpackungen für Nahrungsmittel. Bei den Verpackungen kann es sich beispielsweise um Verpackungen aus Verbundmaterial - also um Verbundverpackungen - handeln. Als Material kann beispielsweise ein Verbund aus mehreren dünnen Lagen aus Papier, Pappe, Kunststoff oder Metall, insbesondere Aluminium eingesetzt werden. Die Vorrichtung umfasst zunächst einen Rahmen. Der Rahmen ist vorzugsweise aus Metall hergestellt und dient der Vorrichtung als Ständer sowie dazu, Bauteile der Vorrichtung an dem Rahmen zu lagern. Die Vorrichtung umfasst zudem wenigstens zwei drehbar an dem Rahmen gelagerte Scheiben, die auch als Riemenscheiben bezeichnet werden. Die Scheiben sind vorzugsweise rund und können Mittel zur formschlüssigen Übertragung von Kräften bzw. Drehmomenten aufweisen, beispielsweise Zähne. Weiterhin weist die Vorrichtung wenigstens ein um die Scheiben umlaufendes Zugmittel auf. Bei dem Zugmittel kann es sich insbesondere um ein formschlüssiges Zugmittel handeln. Schließlich weist die Vorrichtung mehrere Aufnahmen zur Aufnahme der Verpackungen auf, wobei die Aufnahmen mit dem Zugelement verbunden sind. Die Aufnahmen können beispielsweise als rechteckige, oben offene Vertiefung ausgestaltet sein, in die die Verpackungen eingestellt werden können. Die Aufnahmen können direkt (unmittelbar) oder indirekt (mittelbar) - also über weitere Bauteile - mit dem Zugmittel verbunden sein. Die Verbindung dient dem Zweck, dass die Aufnahmen und die darin stehenden Verpackungen durch das Zugmittel bewegt werden können.

Erfindungsgemäß wird vorgeschlagen, dass das Zugmittel ein Riemen, insbesondere ein Synchronriemen ist. Vorzugsweise handelt es sich um einen Zahnriemen. Zahnriemen sind formschlüssige Antriebs- oder Transportelemente, die in gleichmäßigen Abständen Zähne aufweisen. Der Zahnriemen umschlingt die Scheiben, die Zahnlücken aufweisen können, deren Abstände den Abständen der Zähne des Zahnriemens entsprechen. Auf diese Weise können die Zähne des Zahnriemens in die Zahnlücken der Scheiben eingreifen und eine formschlüssige Verbindung ausbilden. Durch die formschlüssige Verbindung weisen Zahnriemen, anders als Flach- oder Keilriemen, einen synchronen Lauf und einen besonders hohen Wirkungsgrad auf. Der Riemen kann beispielsweise - teilweise oder vollständig - aus Kunststoff hergestellt sein.

Im Vergleich zu Ketten ergeben sich durch Riemen die folgenden Vorteile: Riemen brauchen keine Schmierung durch Öle oder Fette und können daher hohe hygienische Anforderungen erfüllen, die bei der Abfüllung von Nahrungsmitteln oftmals bestehen (z.B. sterile Bedingungen). Zudem weisen Riemen aufgrund ihrer durchgehenden, einstückigen Struktur eine geringere Längung auf als aus Gliedern bestehende Ketten, was eine sehr präzise Positionierung der Verpackungen ermöglicht. Zudem ist das akustische und schwingungstechnische Verhalten von Riemen besser als bei Ketten. Weiterhin kann durch Riemen ein verbesserter Rundlauf erreicht werden, da der von auf Zahnrädern laufenden Ketten bekannte "Polygoneffekt" weniger stark auftritt. Damit werden auch weniger Impulse auf das zu transportierende Gut ausgeübt. Zudem können Riemen nicht nur Zugkräfte, sondern - in begrenztem Maß - auch Druckkräfte übertragen. Dies hat insbesondere bei taktweise betriebenen Transportvorrichtungen Vorteile, da die Verpackungen dort abwechselnd beschleunigt und abgebremst werden müssen.

Eine Ausgestaltung der Vorrichtung zeichnet sich aus durch vier drehbar gelagerte Scheiben und zwei um die Scheiben umlaufende Riemen. Durch vier drehbar gelagerte Scheiben und zwei um die Scheiben umlaufende Riemen können auch besonders breite Transportvorrichtungen realisiert werden. Eine große Breite kann beispielsweise dazu genutzt werden, mehrere nebeneinander stehende Verpackungen zu transportieren. Vorzugsweise sind zwei drehbar gelagerte Scheiben auf der einen Seite der Vorrichtung angeordnet und werden von dem ersten Riemen umschlungen. Die anderen beiden drehbar gelagerten Scheiben sind bevorzugt auf der anderen Seite der Vorrichtung angeordnet und werden von dem zweiten Riemen umschlungen. Um einen synchronen Lauf aller Scheiben zu erreichen, sind vorzugsweise wenigstens zwei der Scheiben starr miteinander verbunden. Bevorzugt sind jeweils zwei Scheiben auf derselben Drehachse angeordnet. Alternativ hierzu ist es möglich, einen Synchronlauf über mehrere Antriebe, insbesondere über zwei Antriebe, vorzugsweise über zwei Servomotoren pro Drehachse (bzw. pro Scheibenpaar) zu erreichen. Dabei ist es von Vorteil, dass auf eine physisch ausgebildete und durchgehende, starre Achse verzichtet werden kann. Somit kann der Raum zwischen den Scheiben frei von Bauteilen bleiben, was insbesondere bei der Anwendung innerhalb einer Vorrichtung zur Herstellung und Befüllung von Verbundverpackungen die Gefahr einer Kontaminierung einer ggf. darüber angeordneten Bearbeitungs- oder Befüllstation deutlich verringern kann. Der notwendige exakte Gleichlauf der Scheiben kann in einem solchen Fall dann bevorzugt dadurch erreicht werden, dass die Antriebe einer gemeinsamen Steuer-/Regelungseinrichtung (häufig auch "Master" genannt) folgen.

Eine weitere Ausbildung der Erfindung ist gekennzeichnet durch vier drehbar gelagerte Scheiben und vier um die Scheiben umlaufende Riemen. Auch durch diese Ausbildung können besonders breite Transportvorrichtungen erreicht werden. Vorzugsweise sind zwei drehbar gelagerte Scheiben auf der einen Seite der Vorrichtung angeordnet und werden von dem ersten und dem zweiten Riemen umschlungen. Die anderen beiden drehbar gelagerten Scheiben sind bevorzugt auf der anderen Seite der Vorrichtung angeordnet und werden von dem dritten und dem vierten Riemen umschlungen. Jede Scheibe wird also von zwei nebeneinander angeordneten Riemen umschlungen. Dies hat beispielsweise den Vorteil, dass Riemen mit Riemenschlössern besonders gut eingesetzt werden können. Vorzugsweise sind hierbei die Riemenschlösser von zwei benachbarten Riemen in Transportrichtung so weit versetzt voneinander angeordnet, dass sich niemals beide Riemenschlösser gleichzeitig in demselben Trum befinden. Mit anderen Worten soll sich ein Riemenschloss im Lasttrum befinden während sich das andere Riemenschloss im Leertrum befindet. Auf diese Weise ist dafür gesorgt, dass der Riemen, dessen Riemenschloss sich im Leertrum befindet in gleicher oder nahezu gleicher Weise belastbar ist, wie ein ansonsten baugleicher Riemen ohne Riemenschloss. Der angrenzende, sich um dieselbe Scheibe mitbewegende Riemen, dessen Riemenschloss sich nun im Lasttrum befindet, ist jedoch gegenüber einem ansonsten baugleichen Riemen ohne Riemenschloss in dieser Stellung nur mit einer Teillast belastbar. Gemeinsam sind die beiden Riemen somit in jeder Position eines Umlaufs mit einer Last belastbar, die oberhalb der Teillast und unterhalb der 100% Nennlast liegt.

Der Einsatz mehrerer Riemen pro Scheibe hat zudem den Vorteil, dass in den einzelnen Riemen unterschiedliche Riemenspannungen eingestellt werden können, was beispielsweise für eine axiale Selbstzentrierung der Riemen bzw. Scheiben genutzt werden kann.

Es kann alternativ hierzu vorgesehen sein, dass jeweils zwei Scheiben auf derselben Drehachse angeordnet sind und wenigstens zwei der Scheiben starr miteinander verbunden sind.

Nach einer weiteren Ausgestaltung der Vorrichtung ist vorgesehen, dass jede Scheibe von wenigstens zwei Riemen umschlungen wird. Unabhängig von der Anzahl der Scheiben hat auch diese Ausgestaltung den Vorteil, dass bei der Nutzung von Riemen mit Riemenschlössern der nachteilige Effekt der Riemenschlösser (geringere Zugsteifigkeit und höhere Dehnung im Bereich des Riemenschlosses) durch eine versetzte Anordnung der Riemenschlösser kompensiert werden kann. Zudem können unterschiedliche Riemenspannungen eingestellt werden. Besonders praktisch kann diese Ausgestaltung umgesetzt werden, in dem Scheiben breiter sind als die Riemen, so dass mehrere Riemen nebeneinander auf derselben Scheibe laufen können.

Gemäß einer weiteren Ausbildung der Vorrichtung ist vorgesehen, dass die Scheiben drehbar um wenigstens zwei horizontal verlaufende und parallel zueinander angeordnete Drehachsen gelagert sind. Durch den horizontalen Verlauf der Drehachsen verlaufen die Riemen in zwei übereinander verlaufenden Ebenen. Vorzugsweise sind die beiden Drehachsen in derselben Höhe angeordnet und alle Scheiben gleich groß, so dass die Riemen in zwei horizontal verlaufenden und parallel übereinander liegenden Ebenen verlaufen. Horizontal verlaufende Transportebenen haben den Vorteil, dass auch die Verpackungen in einer horizontalen Ebene transportiert werden. Dies hat den Vorteil, dass die Verpackungen von der Oberseite besonders gut zugänglich sind und senkrecht in den Aufnahmen stehen, so dass keine Inhalte aus der an der Oberseite noch offenen Verpackung austreten können.

Die Vorrichtung zeichnet sich durch mehrere Querträger aus, die jeweils mehrere Aufnahmen zur Aufnahme der Verpackungen aufweisen. Durch Querträger mit mehreren Aufnahmen kann die Transportleistung der Vorrichtung erhöht werden. Die Querträger haben zudem den Vorteil, dass nicht jede Aufnahme direkt mit den Riemen verbunden sein muss; stattdessen können alle Aufnahmen indirekt über den Querträger mit den Riemen verbunden sein. Zudem können die Querträger austauschbar gestaltet sein, so dass beispielsweise unterschiedlich große Verpackungen auf derselben Vorrichtung transportiert werden können. Vorzugsweise weisen die Querträger wenigstens vier, insbesondere wenigstens sechs Aufnahmen auf.

Die Vorrichtung ist gekennzeichnet durch mehrere Adapterelemente, die mit den Riemen verbunden sind. Adapterelemente bieten Anschlussmöglichkeiten für unterschiedliche Aufnahmen bzw. Querträger. Die Aufnahmen bzw. Querträger werden also nicht direkt, sondern indirekt über die Adapterelemente mit den Riemen verbunden. Dies hat den Vorteil, dass die Adapterelemente stets mit den Riemen verbunden bleiben und somit optimal an die Geometrie der Riemen angepasst werden können. Die Adapterelemente können zudem die Führung der Aufnahmen bzw. Querträger übernehmen.

Zu dieser Ausbildung der Vorrichtung wird weiter vorgeschlagen, dass jedes Adapterelement wenigstens eine Rolle aufweist. Durch Rollen können die Adapterelemente besonders gut die Führung der Aufnahmen bzw. Querträger übernehmen. Beispielsweise können die Rollen an oder auf dem Rahmen der Vorrichtung abrollen, um ein Durchhängen der der Riemen zu verhindern. Es soll also eine Funktionstrennung erreicht werden: Der Riemen sorgt für eine Bewegung der Aufnahmen bzw. Querträger in Transportrichtung während die Rollen die Aufnahmen bzw. Querträger in vertikaler Richtung abstützen. Vorzugsweise weist jedes Adapterelement zwei Rollen auf, die in Transportrichtung hintereinander angeordnet sind. Dies sorgt für eine definierte Stellung der Aufnahmen bzw. Querträger.

Bei der Vorrichtung ist vorgesehen, dass jeder Querträger über zwei Adapterelemente mit unterschiedlichen Riemen verbunden ist. Dabei ist vorgesehen, dass jeder Querträger über zwei an gegenüberliegenden Enden des Querträgers angeordnete Adapterelemente mit unterschiedlichen Riemen verbunden ist. Indem jeder Querträger über zwei Adapterelemente mit mehreren unterschiedlichen Riemen verbunden ist, kann auch bei langen Querträgern eine besonders präzise Führung und Positionierung der Verpackungen erreicht werden.

Die Vorrichtung wird ergänzt durch wenigstens zwei Schienen zur Führung der Adapterelemente. Durch Schienen kann der Weg der Adapterelemente besonders genau festgelegt werden. Schienen sind bei Adapterelementen mit Rollen besonders vorteilhaft, da die Rollen auf den Schienen abrollen können und somit eine kontinuierliche Führung der Adapterelemente ermöglichen. Vorzugsweise sind die Schienen an dem Rahmen der Vorrichtung befestigt. Bevorzugt ist ein Kunststoffstreifen, insbesondere ein Gummistreifen auf den Schienen befestigt oder in die Schienen eingelassen. Durch den Streifen können die Haft- und Gleiteigenschaften variabel eingestellt werden (z.B. gute Haftung bei Adapterelementen mit Rollen, gute Gleiteigenschaften bei Adapterelementen ohne Rollen).

Bei der Vorrichtung ist vorgesehen, dass die Riemen Verstärkungen aufweisen. Der Riemen kann aus Kunststoff hergestellt sein. Zur Erhöhung der Zugfestigkeit kann der Riemen verstärkende Zugelemente aus Metall oder besonders zugfesten Fasern aufweisen. Bei dem Zugelement kann es sich beispielsweise um Metalldrähte, insbesondere Stahldrähte handeln, die von dem Grundmaterial des Riemens, beispielsweise Kunststoff, eingeschlossen sind. Kunststoffe zeichnen sich insbesondere durch ihre geringen Kosten, ihre hohe Elastizität und die Möglichkeit einer besonders variablen Formgebung aus. Zugelemente aus Stahl zeichnen sich durch ihre sehr hohe Zugfestigkeit aus. Indem Zugelemente aus Stahl in den Kunststoff eingebettet werden, lassen sich die Eigenschaften beider Materialien in vorteilhafter Weise kombinieren. Alternativ kann es sich bei den Zugelementen um andere zugbelastbare Werkstoffe handeln, beispielsweise um Glasfasern (Kevlar), Kohlenstofffasern oder Textilfasern.

Bei der Vorrichtung ist vorgesehen, dass die Riemen unverstärkte Bereiche mit Bohrungen aufweisen. Die unverstärkten Bereiche haben den Vorteil, dass die Riemen in diesen Bereichen durchgehende Bohrungen zur Befestigung von Anschlussteilen aufweisen können, ohne die Verstärkungen durchtrennen zu müssen. Bei den Anschlussteilen kann es sich beispielsweise um die Adapterelemente handeln. Die Bohrungen verlaufen von der Rückseite zur Vorderseite des Riemens, so dass - im Gegensatz zu einer Bohrung durch die gesamte Breite der Zähne - der kürzeste Weg durch den Riemen gewählt wird. Der Vorteil möglichst kurzer Bohrungen liegt darin, dass eine Verbindung mit sehr hoher Spannung erreicht werden kann ohne dass hierbei eine Verformung des Riemens zu befürchten ist.

Gemäß einer Weiterbildung der Vorrichtung ist vorgesehen, dass die Riemen ein Riemenschloss aufweisen. Unter einem Riemenschloss wird eine Vorrichtung zum Öffnen und Verschließen eines Riemens verstanden. Bei dem Riemenschloss kann es sich beispielsweise um ein aus der DE 10 2013 110 027 B3 bekanntes Riemenschloss handeln. Riemen mit Riemenschlössern haben gegenüber Endlosriemen den Vorteil, dass die Riemen zu Montage- und Demontagezwecken wie ein Gürtel geöffnet und wieder verschlossen werden können. Wenn mehrere Riemen vorgesehen sind, sollten die Riemenschlösser vorzugsweise versetzt zueinander angeordnet sein.

Nach einer weiteren Ausgestaltung der Vorrichtung ist schließlich vorgesehen, dass die Riemen eine unterschiedliche Spannung aufweisen. Durch die Höhe der Spannung kann die axiale Position der Riemen bzw. Scheiben beeinflusst werden. Insbesondere wenn eine Scheibe von mehreren Riemen umschlungen wird, kann die Einstellung von unterschiedlichen Riemenspannungen sinnvoll sein, um eine gezielte Kraft quer zur Transportrichtung zu erzeugen, die von den gegenüberliegend angeordneten Riemen durch eine entgegengerichtete Kraft kompensiert werden kann.

Eine Selbstzentrierung der Riemen ist im Bereich der lebensmittelverarbeitenden Vorrichtungen von besonderer Bedeutung, da der oder die Riemen ansonsten seitlich geführt werden müssen, was immer unmittelbar auch einen Abrieb des Riemens zur Folge hat. Abgeriebene Partikel sind jedoch geeignet, Lebensmittel zu verunreinigen, wozu ggf. bereits entstehende Gerüche oder Dämpfe ausreichen können. Im Bereich der Herstellung von Verbundverpackungen für - insbesondere aseptisch zu verpackende flüssige oder pastöse - Nahrungsmittel kommt erschwerend hinzu, dass die Produktion hier an hohe Durchlauf- oder Taktzeiten gebunden ist, sodass eine Gefahr durch aus einem Riemen frei werdende und ggf. kontaminierte Feinpartikel für die zu schützenden Packungsinhalte nicht vollständig auszuschließen ist.

Zur seitlichen Führung und zur Vermeidung von Abrieb ist es bekannt, Flachriemen über eine bombierte Achse oder Scheibe zu führen. Dies ist zum Einen jedoch nicht auf die Verwendung eines Synchronriemens, bspw. eines Zahnriemens, übertragbar und hat zum Anderen den Nachteil, dass die im Riemen entstehenden Spannungen auf einen schmalen, mittig liegenden Teilbereich des Riemens konzentriert werden und der Riemen so nur zu einem sehr geringen Teil seiner Nennlast belastbar ist.

Stellt man nun die Riemenspannungen von wenigstens zwei - sich auf derselben Scheibe im Einsatz befindlichen und vorzugsweise mechanisch gekoppelten - Riemen unterschiedlich ein, kann eine Selbstzentrierung der Riemenpaarung erreicht werden, wenn sich die Spannungsunterschiede gegeneinander in etwa aufheben. Eine mechanische Kopplung kann beispielsweise bereits dadurch erreicht werden, dass die Riemen sich an ihren Seitenflächen berühren. Um der Gefahr von Abrieb jedoch vollständig zu entgehen, soll unter einer mechanischen Kopplung hier jedoch eine Kopplung verstanden werden, die eine Relativbewegung der Riemen untereinander ausschließt oder zumindest weitgehend ausschließt. Dazu kann beispielsweise eine Brücke oder ein Querträger vorgesehen werden. Besonders bevorzugt ist es, dass über die Länge der Riemen eine Mehrzahl von Brücken oder Querträgern vorgesehen ist.

Sind beispielsweise zwei Scheiben vorhanden und befinden sich jeweils zwei Riemen auf den Scheiben, so ist eine Selbstzentrierung dadurch erreichbar, dass sich die Riemenschlösser der jeweils inneren oder der jeweils äußeren Riemen bei Umlauf in demselben Trum befinden und die Spannung in den Riemenschlössern jeweils abgestimmt etwas ober- oder etwas unterhalb der Riemenpartner eingestellt ist, deren Riemenschloss sich im Umlauf im gegenüberliegenden Trum befindet.

Die zuvor beschriebene Vorrichtung eignet sich in allen dargestellten Ausgestaltungen besonders gut in Verwendung zum Transport von Verpackungen für Nahrungsmittel, insbesondere von Verbundverpackungen für Nahrungsmittel. Die gute Eignung ergibt sich insbesondere aus den zuvor dargestellten Vorteilen von Riemen wie beispielsweise Verzicht auf Schmiermittel und geringe Längung.

Die Erfindung wird nachfolgend anhand einer lediglich ein bevorzugtes Ausführungsbeispiel darstellenden Zeichnung erläutert. In der Zeichnung zeigen:
- Fig. 1:: eine erfindungsgemäße Vorrichtung in perspektivischer Ansicht,
- Fig. 2A:: die Vorrichtung aus Fig. 1 in einer Seitenansicht,
- Fig. 2B:: die Vorrichtung aus Fig. 2A in einer vergrößerten Ansicht,
- Fig. 3A:: die Vorrichtung aus Fig. 1 in einer Draufsicht, und
- Fig. 3B:: die Vorrichtung aus Fig. 3A in einer vergrößerten Ansicht.

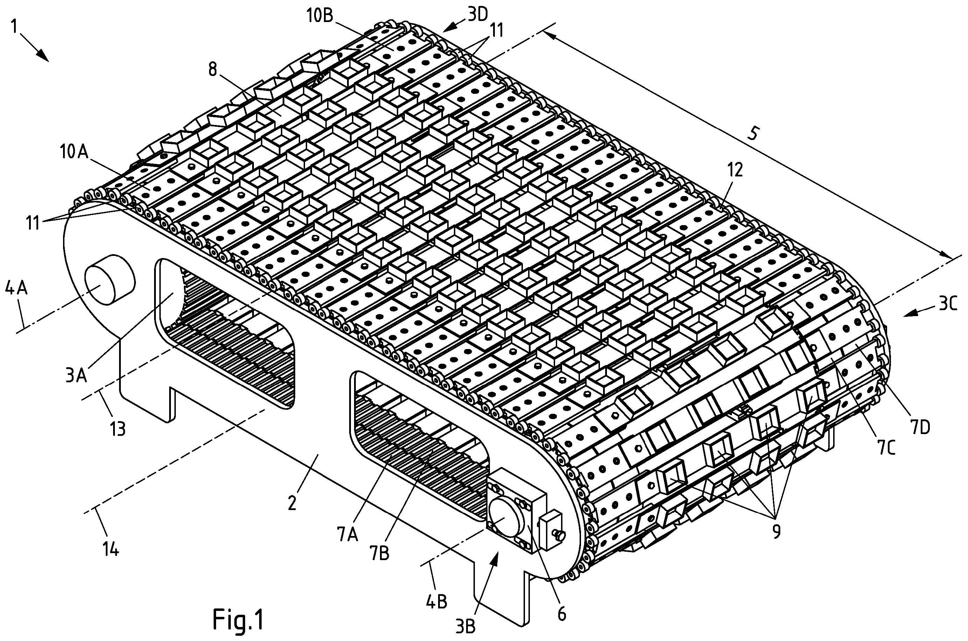

Fig. 1 zeigt eine erfindungsgemäße Vorrichtung 1 zum Transport von Verpackungen in perspektivischer Ansicht. Die Vorrichtung 1 umfasst einen Rahmen 2, an dem vier Scheiben 3A, 3B, 3C, 3D drehbar gelagert sind. Die Scheiben 3A, 3B, 3C, 3D sind rund und gleich groß. Jeweils zwei Scheiben 3A, 3D sowie 3B, 3C sind über - in Fig. 1 nicht dargestellte - Wellen starr miteinander verbunden. Die beiden linken Scheiben 3A, 3D sind drehbar um eine Drehachse 4A gelagert und die beiden rechten Scheibe 3B, 3C sind drehbar um eine Drehachse 4B gelagert, wobei die Drehachsen 4A und 4B parallel zueinander angeordnet sind. Zudem verlaufen beide Drehachsen 4A, 4B horizontal und sind in derselben Höhe angeordnet. Zwischen beiden Drehachsen 4A, 4B stellt sich ein Achsabstand 5 ein, der durch eine Spanneinrichtung 6 veränderbar ist. Die Scheiben 3A, 3B, 3C, 3D werden von vier Riemen 7A, 7B, 7C, 7D umschlungen, von denen jeweils zwei Riemen 7A, 7B sowie 7C, 7D an derselben Seite der Vorrichtung 1 dicht nebeneinander angeordnet sind. Die beiden vorderen Riemen 7A, 7B der vorderen Seite der Vorrichtung 1 umschlingen die beiden vorderen Scheiben 3A, 3B und die beiden hinteren Riemen 7C, 7D der hinteren Seiten der Vorrichtung 1 umschlingen die beiden hinteren Scheiben 3C, 3D.

Die Riemen 7A, 7B der vorderen Seite der Vorrichtung 1 sind über mehrere Querträger 8 mit den Riemen 7C, 7D der hinteren Seite der Vorrichtung 1 verbunden. Jeder Querträger 8 weist vier Aufnahmen 9 auf, die dazu dienen - in Fig. 1 nicht dargestellte - Verpackungen aufzunehmen und zu transportieren. Die Querträger 8 sind über Adapterelemente 10A, 10B mit Riemen 7A, 7B, 7C, 7D verbunden, wobei die vorderen Adapterelemente 10A mit den beiden vorderen Riemen 7A, 7B verbunden sind und wobei die hinteren Adapterelemente 10B mit den beiden hinteren Riemen 7C, 7D verbunden sind. Jedes Adapterelement 10A, 10B weist zwei Rollen 11 auf. Die Rollen 11 dienen dazu, dass die Adapterelemente 10A, 10B und die daran befestigten Querträger 8 präzise geführt werden können; sie dienen insbesondere dazu, die Adapterelemente 10A, 10B und die daran befestigten Querträger 8 abschnittsweise in einer Ebene zu führen. Hierzu sind Schienen 12 vorgesehen, auf denen die Rollen 11 laufen. Bei der in Fig. 1 gezeigten und insoweit bevorzugten Vorrichtung 1 werden die Adapterelemente 10A, 10B und die daran befestigten Querträger 8 in einer oberen Ebene 13 und in einer unteren Ebene 14 geführt, wobei die obere Ebene 13 und die untere Ebene 14 parallel zueinander angeordnet sind.

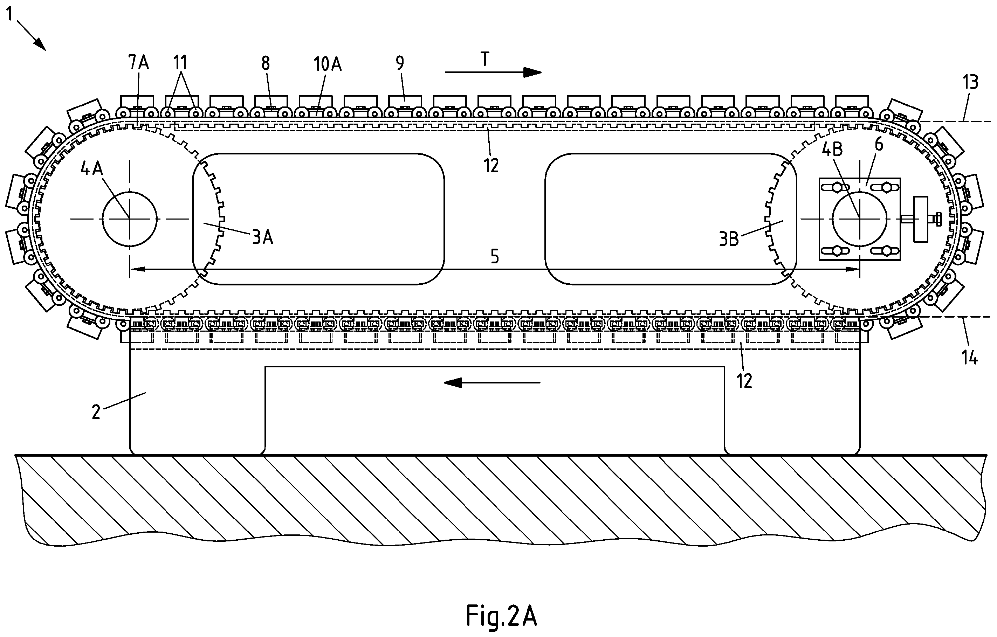

In Fig. 2A ist die Vorrichtung 1 aus Fig. 1 in einer Seitenansicht dargestellt. Die bereits im Zusammenhang mit Fig. 1 beschriebenen Bereiche der Vorrichtung 1 sind in Fig. 2A mit entsprechenden Bezugszeichen versehen. Die bevorzugte Transportrichtung T der Vorrichtung 1 ist schematisch mit Pfeilen dargestellt. In der Seitenansicht ist deutlich erkennbar, dass die Aufnahmen 9 in zwei parallelen Ebenen geführt werden, nämlich abwechselnd in der oberen Ebene 13 und - auf dem Kopf stehend - in der unteren Ebene 14. Die präzise Führung in Ebenen wird dadurch erreicht, dass Adapterelemente 10A, 10B mit Rollen 11 auf Schienen 12 laufen. Auf diese Weise wird ein für Riemenantriebe typisches Durchhängen von Last- und Leertrum vermieden.

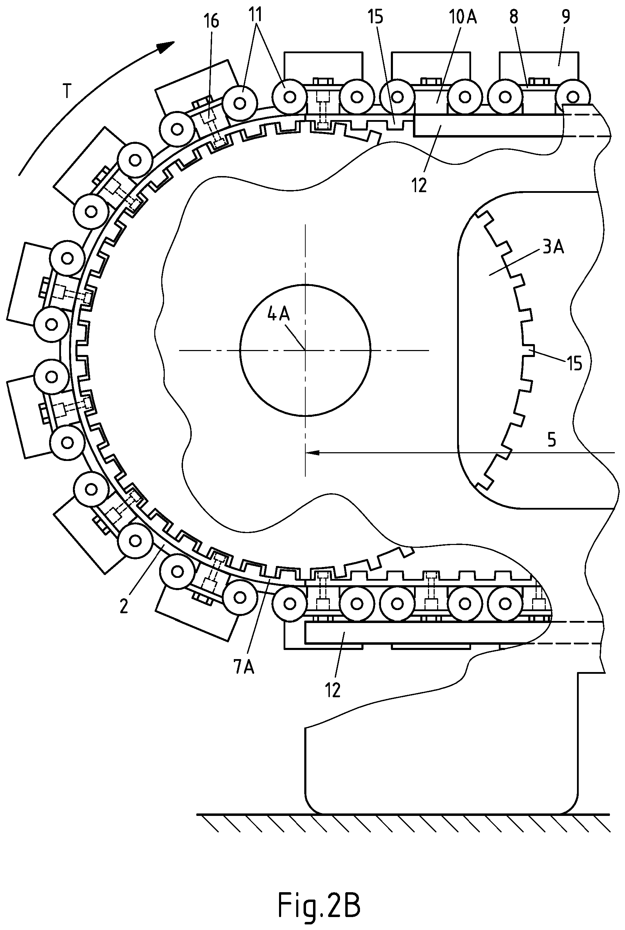

Fig. 2B zeigt die Vorrichtung 1 aus Fig. 2A in einer vergrößerten Ansicht. Die vergrößerte und teilweise aufgebrochene Ansicht betrifft den in Fig. 2A links dargestellten Bereich der Drehachse 4A und der Scheibe 3A. Die bereits im Zusammenhang mit Fig. 1 und Fig. 2A beschriebenen Bereiche der Vorrichtung 1 sind auch in Fig. 2B mit entsprechenden Bezugszeichen versehen. In der vergrößerten Ansicht ist besonders gut die formschlüssige Verbindung zwischen dem Riemen 7A und der Scheibe 3A erkennbar. Zur Ausbildung dieser formschlüssigen Verbindung sind sowohl an dem Riemen 7A als auch an der Scheibe 3A Zähne 15 vorgesehen. Die Zähne 15 des Riemens 7A (und die Zähne 15 der anderen, in Fig. 2B nicht dargestellten Riemen 7B, 7C, 7D) und die Zähne 15 der Scheibe 3A (und die Zähne 15 der anderen, in Fig. 2B nicht dargestellten Scheiben 3B, 3C, 3D) greifen ineinander und gewährleisten eine formschlüssige, schlupffreie Übertragung der Antriebsleistung. In der Vergrößerung ist zudem erkennbar, dass die Querträger 8 über Verbindungsmittel 16 mit dem Adapterelementen 10A verbunden sind. Bei den Verbindungsmitteln 16 kann es sich beispielsweise um lösbare Verbindungsmittel wie Schrauben handeln.

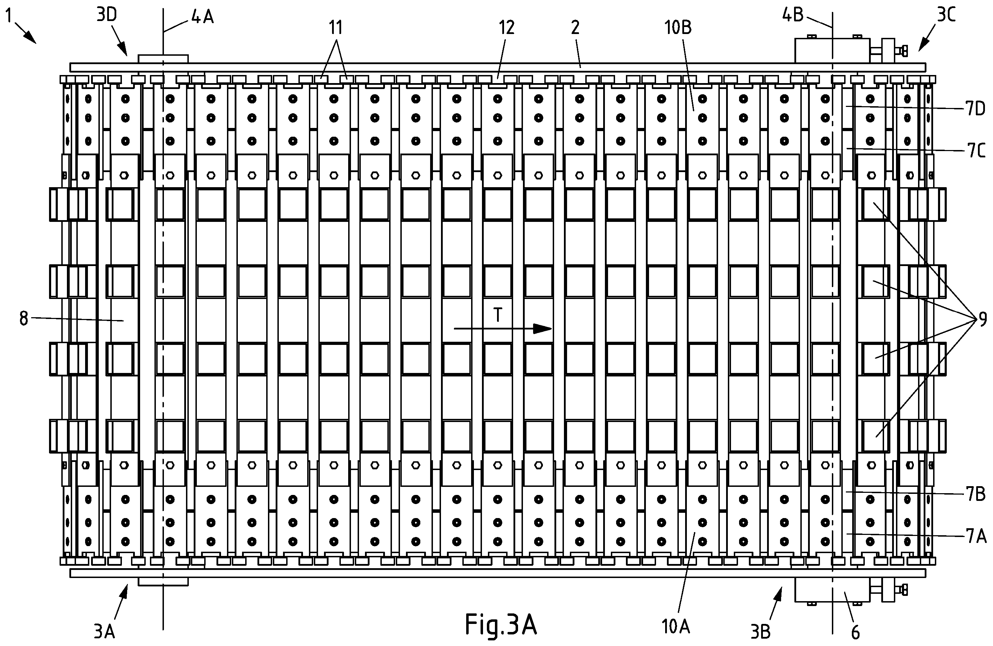

In Fig. 3A ist die Vorrichtung 1 aus Fig. 1 in einer Draufsicht dargestellt. Die bereits im Zusammenhang mit Fig. 1 bis Fig. 2B beschriebenen Bereiche der Vorrichtung 1 sind auch in Fig. 3A mit entsprechenden Bezugszeichen versehen. In der Draufsicht kann der parallele Verlauf der vier Riemen 7A, 7B, 7C, 7D besonders deutlich erkannt werden. Die beiden unten dargestellten Riemen 7A, 7B umschlingen die beiden Scheiben 3A, 3B und die beiden oben dargestellten Riemen 7C, 7D umschlingen die beiden Scheiben 3C, 3D. Zudem ist deutlich dargestellt, dass die Rollen 11 auf einer Schiene 12 laufen, die seitlich von dem Rahmen 2 begrenzt wird. Die Adapterelemente 10A, 10B sind in gleichen Abständen zueinander mit den Riemen 7A, 7B, 7C, 7D verbunden, so dass auch die Querträger 9 in gleichen Abständen zueinander und vorzugsweise parallel zueinander angeordnet sind.

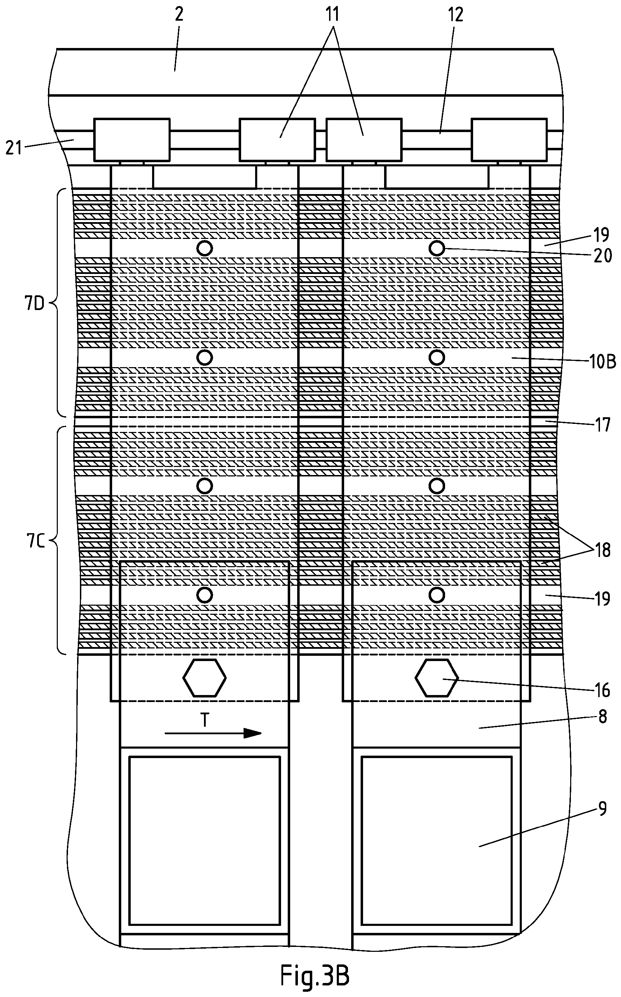

Fig. 3B zeigt die Vorrichtung 1 aus Fig. 3A in einer vergrößerten Ansicht. Die vergrößerte Ansicht betrifft den Bereich der beiden oberen Riemen 7C, 7D und den damit verbundenen Adapterelementen 10B. Auch in Fig. 3B sind die bereits im Zusammenhang mit Fig. 1 bis Fig. 3A beschriebenen Bereiche der Vorrichtung 1 mit entsprechenden Bezugszeichen versehen. In der Vergrößerung ist der Aufbau der Riemen 7C, 7D besonders deutlich erkennbar. Beide Riemen 7C, 7D verlaufen parallel zueinander und sind lediglich durch einen schmalen Spalt 17 voneinander beabstandet.

Beide Riemen 7C, 7D sind vorzugsweise aus Kunststoff hergestellt und weisen Verstärkungen 18 aus Metall auf. Bei den Verstärkungen 18 kann es sich beispielsweise um Stahldrähte oder zugfeste Fasern handeln, die in die Riemen 7C, 7D eingebettet sind. Die im Zusammenhang mit Fig. 3B beschriebenen Eigenschaften der oberen Riemen 7C, 7D und der damit verbundenen Adapterelemente 10B gelten in entsprechender Weise auch für die beiden unteren Riemen 7A, 7B und die damit verbundenen Adapterelemente 10A.

Beide Riemen 7C, 7D weisen zwei unverstärkte Bereiche 19 auf, in denen keine Verstärkungen 18 verlaufen. Im Bereich der unverstärkten Bereiche 19 sind Bohrungen 20 vorgesehen, die in Transportrichtung T gleiche Abstände zueinander aufweisen. Die Öffnungen 20 dienen erfindungsgemäß dazu, die Adapterelemente 10B mit den Riemen 7C, 7D formschlüssig zu verbinden. Auch diese Verbindung kann durch - in Fig. 3B nicht dargestellte - Verbindungselemente wie beispielsweise Schrauben erzeugt werden. Die Rollen 11 der Adapterelemente 10B rollen vorzugsweise auf einem Kunststoffstreifen 21 aus Gummi, der auf der Schiene 12 befestigt ist oder in die Schiene 12 eingelassen ist.

Die in Fig. 1 bis Fig. 3B dargestellten Riemen 7A, 7B, 7C, 7D können aus Gründen einfacher Montier- und Demontierbarkeit ein "Riemenschloss" aufweisen. Unter einem Riemenschloss wird eine Vorrichtung zum Öffnen und Verschließen eines Riemens verstanden. Bei dem Riemenschloss kann es sich beispielsweise um ein aus der DE 10 2013 110 027 B3 bekanntes Riemenschloss handeln. Vorzugsweise sind die Riemenschlösser von zwei benachbarten Riemen 7A, 7B sowie 7C, 7D in Transportrichtung T so weit versetzt voneinander angeordnet, dass sich niemals beide Riemenschlösser gleichzeitig in derselben Ebene 13, 14 der Vorrichtung 1 befinden.

### Bezugszeichenliste:

- 1:: Vorrichtung zum Transport von Verpackungen
- 2:: Rahmen
- 3A, 3B, 3C, 3D:: Scheibe
- 4A, 4B:: Drehachse
- 5:: Achsabstand
- 6:: Spanneinrichtung
- 7A, 7B, 7C, 7D:: Riemen
- 8:: Querträger
- 9:: Aufnahme
- 10A, 10B:: Adapterelement
- 11:: Rolle
- 12:: Schiene
- 13:: obere Ebene
- 14:: untere Ebene
- 15:: Zähne
- 16:: Verbindungsmittel
- 17:: Spalt
- 18:: Verstärkung
- 19:: unverstärkter Bereich
- 20:: Bohrung
- 21:: Kunststoffstreifen

- T:: Transportrichtung

## Patentansprüche

1. Vorrichtung (1) zum Transport von Verpackungen, insbesondere Verpackungen für Nahrungsmittel, umfassend:
- einen Rahmen (2),
- wenigstens zwei drehbar an dem Rahmen (2) gelagerte Scheiben (3A, 3B, 3C, 3D),
- wenigstens ein um die Scheiben (3A, 3B, 3C, 3D) umlaufendes Zugmittel,
- mehrere Aufnahmen (9) zur Aufnahme der Verpackungen,
- wobei die Aufnahmen (9) mit dem Zugmittel verbunden sind,
- wobei das Zugmittel ein Riemen (7A, 7B, 7C, 7D), insbesondere ein Synchronriemen ist,
- mehrere Querträger (8), die jeweils mehrere Aufnahmen (9) zur Aufnahme der Verpackungen aufweisen,
- mehrere Adapterelemente (10A, 10B), die mit den Riemen (7A, 7B, 7C, 7D) verbunden sind, wenigstens zwei Schienen (12) zur Führung der Adapterelemente (10A, 10B),
- wobei jeder Querträger (8) über zwei an gegenüberliegenden Enden des Querträgers (8) angeordnete Adapterelemente (10A, 10B) mit unterschiedlichen Riemen (7A, 7B, 7C, 7D) verbunden ist, und
- wobei die Riemen (7A, 7B, 7C, 7D) Verstärkungen (18) aufweisen,
**dadurch gekennzeichnet, dass**
die Riemen (7A, 7B, 7C, 7D) unverstärkte Bereiche (19) mit Bohrungen (20) aufweisen, wobei die Bohrungen (20) dazu dienen, die Adapterelemente (10A, 10B) mit den Riemen (7A, 7B, 7C, 7D) formschlüssig zu verbinden, und dass die Bohrungen (20) von der Rückseite zur Vorderseite des Riemens (7A, 7B, 7C, 7D) verlaufen.

2. Vorrichtung nach Anspruch 1,
**gekennzeichnet durch**
vier drehbar gelagerte Scheiben (3A, 3B, 3C, 3D) und zwei um die Scheiben (3A, 3B, 3C, 3D) umlaufende Riemen (7A, 7B, 7C, 7D).

3. Vorrichtung nach Anspruch 1 oder Anspruch 2,
**gekennzeichnet durch**
vier drehbar gelagerte Scheiben (3A, 3B, 3C, 3D) und vier um die Scheiben (3A, 3B, 3C, 3D) umlaufende Riemen (7A, 7B, 7C, 7D).

4. Vorrichtung nach einem der Ansprüche 1 bis 3,
**dadurch gekennzeichnet, dass**
jede Scheibe (3A, 3B, 3C, 3D) von wenigstens zwei Riemen (7A, 7B, 7C, 7D) umschlungen wird.

5. Vorrichtung nach einem der Ansprüche 1 bis 4,
**dadurch gekennzeichnet, dass**
die Scheiben (3A, 3B, 3C, 3D) drehbar um wenigstens zwei horizontal verlaufende und parallel zueinander angeordnete Drehachsen (4A, 4B) gelagert sind.

6. Vorrichtung nach Anspruch 1,
**dadurch gekennzeichnet, dass**
jedes Adapterelement (10A, 10B) wenigstens eine Rolle (11) aufweist.

7. Vorrichtung nach einem der Ansprüche 1 bis 6,
**dadurch gekennzeichnet, dass**
die Riemen (7A, 7B, 7C, 7D) ein Riemenschloss aufweisen.

8. Vorrichtung nach einem der Ansprüche 1 bis 7,
**dadurch gekennzeichnet, dass**
die Riemen (7A, 7B, 7C, 7D) eine unterschiedliche Spannung aufweisen.

9. Verwendung einer Vorrichtung (1) nach einem der Ansprüche 1 bis 8 zum Transport von Verpackungen für Nahrungsmittel, insbesondere von Verbundverpackungen für Nahrungsmittel.

## Claims

1. Device (1) for transporting packagings, in particular packagings for foodstuffs, comprising:
- a frame (2),
- at least two pulleys (3A, 3B, 3C, 3D) mounted rotatably on the frame (2),
- at least one traction means which runs around the pulleys (3A, 3B, 3C, 3D),
- a plurality of mounts (9) for receiving the packagings,
- wherein the mounts (9) are connected to the traction means,
- wherein the traction means is a belt (7A, 7B, 7C, 7D), in particular a synchronous belt,
- a plurality of crossbars (8) which each have a plurality of mounts (9) for receiving the packagings,
- a plurality of adapter elements (10A, 10B) which are connected to the belts (7A, 7B, 7C, 7D),
- at least two rails (12) for guiding the adapter elements (10A, 10B),
- wherein each crossbar (8) is connected to different belts (7A, 7B, 7C, 7D) via two adapter elements (10A, 10B) arranged at opposite ends of the crossbar (8), and
- wherein the belts (7A, 7B, 7C, 7D) include reinforcements (18),
**characterised in that**
the belts (7A, 7B, 7C, 7D) have non-reinforced regions (19) with holes (20), wherein the holes (20) serve to connect the adapter elements (10A, 10B) to the belts (7A, 7B, 7C, 7D) and that the drill holes (20) run from the back to the front of the belt (7A, 7B, 7C, 7D).

2. Device according to claim 1,
**characterised by**
four rotatably mounted pulleys (3A, 3B, 3C, 3D) and two belts (7A, 7B, 7C, 7D) running around the pulleys (3A, 3B, 3C, 3D).

3. Device according to claim 1 or claim 2,
**characterised by**
four rotatably mounted pulleys (3A, 3B, 3C, 3D) and four belts (7A, 7B, 7C, 7D) running around the pulleys (3A, 3B, 3C, 3D).

4. Device according to any one of claims 1 to 3,
**characterised in that**
at least two belts (7A, 7B, 7C, 7D) loop around each pulley (3A, 3B, 3C, 3D.

5. Device according to any one of claims 1 to 4,
**characterised in that**
the pulleys (3A, 3B, 3C, 3D) are mounted rotatably about at least two horizontal rotational axes (4A, 4B) which are arranged parallel to one another.

6. Device according to claim 1,
**characterised in that**
each adapter element (10A, 10B) has at least one roller (11).

7. Device according to any one of claims 1 to 6,
**characterised in that**
the belts (7A, 7B, 7C, 7D) have a belt fastener.

8. Device according to any one of claims 1 to 7,
**characterised in that**
the belts (7A, 7B, 7C, 7D) have a different tension.

9. Use of a device (1) according to any one of claims 1 to 8 for transporting packagings for foodstuffs, in particular composite packagings for foodstuffs.

## Revendications

1. Dispositif (1) de transport d'emballages, en particulier d'emballages pour produits alimentaires, comportant :
- un cadre (2),
- au moins deux poulies (3A, 3B, 3C, 3D) montées de manière rotative sur le cadre (2),
- au moins un lien souple tournant autour des poulies (3A, 3B, 3C, 3D),
- plusieurs logements (9) pour loger les emballages,
- les logements (9) étant reliés au lien souple,
- le lien souple est une courroie (7A, 7B, 7C, 7D), en particulier une courroie synchrone,
- plusieurs traverses (8) présentant chacune plusieurs logements (9) pour la réception des emballages,
- plusieurs éléments adaptateurs (10A, 10B) reliés aux courroies (7A, 7B, 7C, 7D), au moins deux rails (12) pour le guidage des éléments adaptateurs (10A, 10B),
- chaque traverse (8) étant reliée par deux éléments adaptateurs (10A, 10B) agencés aux extrémités opposées de la traverse (8) avec différentes courroies (7A, 7B, 7C, 7D), et
- les courroies (7A, 7B, 7C, 7D) présentant des renforts (18),
**caractérisé en ce que**
les courroies (7A, 7B, 7C, 7D) présentent des zones non renforcées (19) avec des alésages (20), les alésages (20) servant à relier, par complémentarité de forme, les éléments adaptateurs (10A, 10B) aux courroies (7A, 7B, 7C, 7D) et **en ce que** les alésages (20) s'étendent de l'arrière vers l'avant de la courroie (7A, 7B, 7C, 7D).

2. Dispositif selon la revendication 1,
**caractérisé par**
quatre poulies agencées rotatives (3A, 3B, 3C, 3D) et deux courroies (7A, 7B, 7C, 7D) tournant autour des poulies (3A, 3B, 3C, 3D).

3. Dispositif selon la revendication 1 ou la revendication 2,
**caractérisé par**
quatre poulies agencées rotatives (3A, 3B, 3C, 3D) et quatre courroies (7A, 7B, 7C, 7D) tournant autour des courroies (3A, 3B, 3C, 3D).

4. Dispositif selon l'une quelconque des revendications 1 à 3,
**caractérisé en ce que**
chaque poulie (3A, 3B, 3C, 3D) est entourée par au moins deux courroies (7A, 7B, 7C, 7D).

5. Dispositif selon l'une quelconque des revendications 1 à 4,
**caractérisé en ce que**
les poulies (3A, 3B, 3C, 3D) sont montées de façon à pouvoir tourner autour d'au moins deux axes de rotation (4A, 4B) s'étendant horizontalement et agencés parallèlement l'un par rapport à l'autre.

6. Dispositif selon la revendication 1,
**caractérisé en ce que**
chaque élément adaptateur (10A, 10B) présente au moins un galet (11).

7. Dispositif selon l'une quelconque des revendications 1 à 6,
**caractérisé en ce que**
les courroies (7A, 7B, 7C, 7D) présentent un verrou de courroie.

8. Dispositif selon l'une quelconque des revendications 1 à 7,
**caractérisé en ce que**
les courroies (7A, 7B, 7C, 7D) présentent une tension différente.

9. Utilisation d'un dispositif (1) selon l'une quelconque des revendications 1 à 8 pour le transport d'emballages pour produits alimentaires, en particulier d'emballages composites pour produits alimentaires.
